# EUROPÄISCHE PATENTANMELDUNG

(11) **EP 4 636 456 A2**
(43) Veröffentlichungstag der Anmeldung: **22.10.2025**
(21) Anmeldenummer: 25198134.6
(22) Anmeldetag: 29.03.2021
(51) Int. Cl.: G02B 21/36

(54) **OPTISCHE ANORDNUNG FÜR EIN SCHIEFEEBENENMIKROSKOP ZUR VERBESSERUNG DER AUFLÖSUNG**

(30) Priorität: 30.03.2020 DE 102020204066
(62) Teilanmeldung aus: 21716645.3
(71) Anmelder: Leica Microsystems CMS GmbH, 35578 Wetzlar (DE)
(72) Erfinder: Fahrbach, Florian, 35578 Wetzlar (DE)
(74) Vertreter: Schaumburg und Partner Patentanwälte mbB

(57) **Zusammenfassung**

Die Erfindung betrifft eine optische Anordnung (101) für ein Schiefeebenenmikroskop (103), beispielsweise ein OPM- (105) oder SCAPE-Mikroskop. Im Stand der Technik ist die mögliche Auflösung durch die Numerische Apertur (NA) einer Abbildungsoptik begrenzt. Erfindungsgemäß umfasst die Optische Anordnung (101) eine optische Beleuchtungs- und Detektionsanordnung (107) zur Beleuchtung eines Probenvolumens (117) und zur Transmission von Streu- und/oder Fluoreszenzlicht (129) in eine reelle Zwischenbildebene (133); eine optische Aufrichteeinheit (139) zur Abbildung auf einem Detektor (143); und ein an der Aufrichteeinheit (139) angeordnetes Vorsatzelement (145) mit einer Grenzfläche (147), wobei sich Strahlengänge (125b) des Beleuchtungslichts (115) und des Streu- und/oder Fluoreszenzlichts (129, 429) auf der Bildseite (123) schneiden, und der Strahlengang (225b) des Beleuchtungslichts (115) von der Grenzfläche (147) beabstandet ist.

## Beschreibung

Die Erfindung betrifft eine optische Anordnung für ein Schiefeebenenmikroskop, beispielsweise ein Oblique Plane Illumination Microscope (OPM) oder ein Swept Confocally Aligned Planar Excitation Microscope (SCAPE).

Die Lösungen aus dem Stand der Technik haben aufgrund der limitierten numerischen Apertur NA auch eine begrenzte Auflösung, können den Nachteil aufweisen, dass diese anfällig gegenüber Staub und ähnlichen Verschmutzungen sind, oder benötigen zusätzliche optische Elemente zur Einkopplung von Beleuchtungslicht, was die Effizienz verringert.

Mit der vorliegenden Erfindung sollen diese Nachteile ausgeräumt und optische Anordnungen für Schiefeebenenmikroskope bereitgestellt werden, die eine höhere Auflösung als auch eine höhere Lichtausbeute ermöglichen.

Die Erfindung löst die obige Aufgabe für die eingangs genannte optische Anordnung dadurch, dass die optische Anordnung eine optische Beleuchtungs- und Detektionsanordnung aufweist, die ausgestaltet ist, Beleuchtungslicht in Richtung eines Probenvolumens zu transmittieren und im Probenvolumen mit dem Beleuchtungslicht ein schräg zu einer optischen Achse der Beleuchtungs- und Detektionsanordnung orientiertes Lichtblatt auszubilden, und Streu- und/oder Fluoreszenzlicht aus einem mit dem Lichtblatt beleuchtetem Bereich des Probenvolumens aufzufangen und zu transmittieren, wobei die optische Beleuchtungs- und Detektionsanordnung ferner ausgestaltet ist, den beleuchteten Bereich der Probe als reelles Zwischenbild in einer reellen Zwischenbildebene abzubilden, welche schräg bezüglich der optischen Achse der optischen Beleuchtungs- und Detektionsanordnung orientiert und auf einer, dem Probenvolumen abgewandten Bildseite der Beleuchtungs- und Detektionsanordnung ausgebildet ist. Die optische Anordnung umfasst ferner eine optische Aufrichteeinheit zum Abbilden des reellen Zwischenbildes auf einen Detektor, wobei eine optische Achse der Aufrichteeinheit geneigt zur optischen Achse der optischen Beleuchtungs- und Detektionsanordnung und im Wesentlichen senkrecht zur reellen Zwischenbildebene orientiert ist; und ein an der Aufrichteeinheit angeordnetes, sich in Richtung des reellen Zwischenbildes erstreckendes Vorsatzelement, welches eine im Wesentlichen parallel zur reellen Zwischenbildebene orientierte Grenzfläche ausbildet. Erfindungsgemäß schneiden sich Strahlengänge des eingekoppelten Beleuchtungslichts und des von der Beleuchtungs- und Detektionsanordnung transmittierten Streu- und/oder Fluoreszenzlichts auf der Bildseite der Beleuchtungs- und Detektionsanordnung, wobei der Strahlengang des Beleuchtungslichts von der Grenzfläche des Vorsatzelementes beabstandet ist.

Eine solche Beabstandung kann entweder durch einen parallelen Versatz, oder durch eine Verkippung zwischen dem Strahlengang des Beleuchtungslichts und der Grenzfläche des Vorsatzelementes realisiert werden. Auf diese beiden Möglichkeiten wird im Zuge dieser Beschreibung später eingegangen. Der Strahlengang des Beleuchtungslichts verläuft somit nicht durch die Grenzfläche. Unter dem Begriff "beabstandet" ist somit zu verstehen, dass der Strahlengang des Beleuchtungslichts nicht auf die Grenzfläche trifft.

Die erfindungsgemäße optische Anordnung hat somit den Vorteil, dass mittels des Vorsatzelementes die numerische Apertur (NA) der Aufrichteeinheit erhöht werden kann. Eine höhere numerische Apertur wirkt sich positiv auf die Auflösung der Abbildung durch die Aufrichteeinheit aus, d.h. erhöht diese. Ferner kann aufgrund der Beabstandung des Strahlengangs des Beleuchtungslichts von der Grenzfläche des Vorsatzelementes das Beleuchtungslicht ungehindert auf der dem Probenvolumen abgewandten Bildseite der Beleuchtungs- und Detektionsanordnung in die Beleuchtungs- und Detektionsanordnung eingekoppelt werden. Hierfür ist kein weiteres optisches Element, wie beispielsweise ein dichroitischer Spiegel notwendig. Dieser, oftmals im Stand der Technik verwendete dichroitische Spiegel hat den Nachteil, dass er dort in der optischen Beleuchtungs- und Detektionsanordnung im Strahlengang des Streu- und/oder Fluoreszenzlichtes angeordnet ist, und dieses somit schwächen und/oder begrenzen kann.

Ein weiterer Vorteil einer solchen erfindungsgemäßen Anordnung ist die Möglichkeit, mittels einer Bewegung wenigstens eines Elementes der Beleuchtungs- und Detektionsanordnung in Richtung dessen optischer Achse das im Probenvolumen ausgebildete Lichtblatt zu verschieben und somit eine Probe scannen zu können. Dies ist nicht möglich, wenn die Einkopplung über einen dichroitischen Spiegel in der Beleuchtungs- und Detektionsanordnung erfolgt. Die erfindungsgemäße Anordnung erlaubt es, aufgrund der Beabstandung des Strahlengangs des Beleuchtungslichts von der Grenzfläche des Vorsatzelementes das Beleuchtungslicht in der dem Probenvolumen abgewandten Bildseite der Beleuchtungs- und Detektionsanordnung ungehindert in die Beleuchtungs- und Detektionsanordnung einzukoppeln.

Die optische Anordnung kann durch weitere zusätzliche technische Merkmale verbessert werden. Mögliche Ausgestaltungen, mit zusätzlichen technischen Merkmale, werden im Folgenden beschrieben. Die technischen Merkmale unterschiedlicher Ausgestaltungen können beliebig miteinander kombiniert oder weggelassen werden, wenn der mit dem weggelassenen technischen Merkmal assoziierte technische Effekt nicht erfindungsbestimmend ist.

Die optische Beleuchtungs- und Detektionsanordnung ist bevorzugt symmetrisch bzw. näherungsweise symmetrisch aufgebaut. Das heißt, dass diese sowohl aus einer dem Probenvolumen zugewandten Oberseite betrachtet, als auch aus der gegenüberliegenden Bildseite betrachtet aus identischen optischen Komponenten aufgebaut sein kann. Die Beleuchtungs- und Detektionsanordnung ist somit spiegelsymmetrisch zu einer Ebene, welche senkrecht zu einer optischen Achse der Beleuchtungs- und Detektionsanordnung orientiert und im Zentrum derselben angeordnet ist. Werden in der erfindungsgemäßen Vorrichtung unterschiedliche Objektive benötigt, so ist die optische Beleuchtungs- und Detektionsanordnung lediglich im allgemeinen strukturellen Aufbau hinsichtlich der Funktion der verwendeten Komponenten identisch zu obiger Beschreibung des näherungsweise symmetrischen Aufbaus. Das heißt, der Aufbau aus Objektiv, Tubuslinse, ggf. zwei Scanlinsen, Tubuslinse und Objektiv. Allerdings können sich die Brennweiten und/oder die numerische Apertur der Elemente unterscheiden.

Die Beleuchtungs- und Detektionsanordnung kann beispielsweise ein 4f-Aufbau sein. Bevorzugt umfasst die Beleuchtungs- und Detektionsanordnung wenigstens zwei entgegensetzt orientierte Objektive. Weitere (Tubus-)Linsen können auch vorhanden sein.

Ein Lichtblatt ist aus dem Stand der Technik bekannt, ebenso die Möglichkeit, ein statisches oder quasi-statisches Lichtblatt (durch Abrastern einer Linie mit einem Strahlenbündel ) zu erzeugen. Bevorzugt werden in diesem optischen Aufbau unterschiedliche Bereiche der Beleuchtungs- und Detektionsanordnung zur Beleuchtung bzw. zur Detektion verwendet. Die Strahlengänge des Beleuchtungslichts, als auch des Streu- und/oder Fluoreszenzlichtes in der Beleuchtungs- und Detektionsanordnung sind somit räumlich voneinander getrennt, können sich jedoch in der Beleuchtungs- und Detektionsanordnung schneiden.

Durch den bevorzugt symmetrischen Aufbau der Beleuchtungs- und Detektionsanordnung kann ein auf der Bildseite der Beleuchtungs- und Detektionsanordnung ausgebildetes Lichtblatt im Probenvolumen abgebildet werden. Das dort abgebildete Lichtblatt beleuchtet die Probe, von der Streu- und/oder Fluoreszenzlicht ausgestrahlt wird. Dieses ausgestrahlte Licht wird von der Beleuchtungs- und Detektionsanordnung aufgesammelt, zur Bildseite hin transmittiert und in der entsprechenden Zwischenbildebene als reelles Zwischenbild abgebildet. Sowohl das abzubildende Lichtblatt (Abbildung von der Bildseite zur Probenseite), als auch der abzubildende beleuchtete Bereich des Probenvolumens (Abbildung von der Probenseite zur Bildseite) sind schräg, d.h. unter einem Winkel ungleich 90°, bezüglich der optischen Achse der Beleuchtungs- und Detektionsanordnung orientiert.

Um dieses schräg orientierte reelle Zwischenbild ohne Verzerrung und scharf auf einen Detektor abbilden zu können, ist die optische Achse der Aufrichteeinheit bezüglich der optischen Achse der Beleuchtungs- und Detektionsanordnung geneigt und im Wesentlichen senkrecht zur reellen Zwischenbildebene orientiert.

Als Vorsatzelement ist bevorzugt ein Element aus einem optischen Material mit einer Brechzahl größer als Luft zu verstehen. Das Vorsatzelement kann bevorzugt aus einem zumindest für die Wellenlängen des Streu- und/oder Fluoreszenzlichtes transparenten Material bestehen. Bevorzugt ist dieses ein glasartiges oder keramikartiges Material, welches weiter bevorzugt auch für das Beleuchtungslicht transparent ist. Die Grenzfläche ist eine zwischenbildseitige (also der Aufrichteeinheit abgewandte) Begrenzungsfläche (Seite) des Vorsatzelementes, womit das Vorsatzelement räumlich begrenzt wird. Die Grenzfläche steht im Wesentlichen senkrecht auf der optischen Achse der Aufrichteeinheit und stellt typischerweise ein von der Aufrichteeinheit beabstandetes Ende des Vorsatzelementes dar. Dennoch kann in einigen Ausgestaltungen eine mit der Grenzfläche zumindest abschnittsweise (d.h. im Bereich der Grenzfläche) kongruente Ebene definiert werden, die weitere Bereiche, beispielsweise den Randbereich des Vorsatzelementes schneidet. In diesen Randbereichen können ferner Befestigungsstrukturen zur Befestigung des Vorsatzelementes bereitgestellt sein.

Das Vorsatzelement ist im Wesentlichen durch dessen Grenzfläche charakterisiert. Das Vorsatzelement kann unterschiedliche Formen aufweisen, zum Beispiel quaderförmig, würfelförmig oder kegelstumpfförmig ausgestaltet sein, wobei die Grenzfläche eine Seitenfläche einer solchen Struktur darstellt. Ist das Vorsatzelement als Kegelstumpf ausgebildet, so kann sich die Grundfläche eines solchen Vorsatzelementes an der Aufrichteeinheit befinden, und die Deckfläche die Grenzfläche umfassen bzw. darstellen. Bevorzugt ist ein durch die Grenzfläche definierter Bereich, der durch die Aufrichteeinheit abgebildet werden kann, größer als die Abmessungen des relevanten, d.h. abzubildenden Bereichs des reellen Zwischenbildes (das sogenannte ,field of interest'). Die am Vorsatzelement ausgebildete Grenzfläche kann somit zumindest einen Teil der zwischenbildseitigen Begrenzungsfläche des Vorsatzelementes sein, welche senkrecht auf der optischen Achse der Aufrichteeinheit steht.

Eine kegelstumpfförmige Ausgestaltung des Vorsatzelementes hat den Vorteil, dass durch die mögliche Verjüngung zur Grenzfläche hin eine engere Positionierung optischer Aufbauten zueinander, d.h. der Beleuchtungs- und Detektionsanordnung zur Aufrichteeinheit und ggf. zu einer Beleuchtungsoptik, möglich ist, als beispielsweise unter Nutzung zylinderförmiger Vorsatzelemente.

Erfindungsgemäß erfolgt die Einkopplung des Beleuchtungslichtes, als auch die Abbildung des reellen Zwischenbildes des Streu- und/oder Fluoreszenzlichtes auf der Bildseite der Beleuchtungs- und Detektionsanordnung, so dass sich die Strahlengänge des Beleuchtungslichts und des Streu- und/oder Fluoreszenzlichts auf dieser Bildseite schneiden. Durch Beabstandung des Strahlenganges des Beleuchtungslichts von der Grenzfläche des Vorsatzelementes kann eine Abschattung des Beleuchtungslichts vermieden und eine korrekte Beleuchtung eines Bereiches einer im Probenvolumen angeordneten Probe sichergestellt werden.

Das Vorsatzelement kann bevorzugt in die optische Aufrichteeinheit unter Bildung eines gemeinsamen Bauteils integriert sein. Dies hat den Vorteil, dass das so entstandene gemeinsame Bauteil einfach ausgetauscht werden kann, ohne eine weitere Orientierung oder Justage des Vorsatzelementes zur optischen Aufrichteeinheit notwendig zu machen.

Ferner kann die Aufrichteeinheit ein Immersionsobjektiv sein. Diese sind kommerziell erhältlich und können somit nach Bereitstellung des entsprechenden Immersionsmediums sofort genutzt werden. Bevorzugt ist das Vorsatzelement jedoch aus einem festen optischen Material.

In einer weiteren Ausgestaltung der erfindungsgemäßen optischen Anordnung kann die Grenzfläche des Vorsatzelementes in Richtung der optischen Achse der Aufrichteeinheit beabstandet von der reellen Zwischenbildebene angeordnet sein. Eine solche Anordnung hat den Vorteil, dass auf der Grenzfläche lokalisierte Störungen, wie beispielsweise Oberflächenrauheiten, -ungenauigkeiten oder auf der Grenzfläche abgelagerter Staub oder andere Fremdkörper nicht mehr scharf durch die Aufrichteeinheit auf einem Detektor abgebildet werden. Der Einfluss solcher Störungen auf die Abbildungsqualität der Aufrichteeinheit kann durch die Beabstandung der Grenzfläche von der reellen Zwischenbildebene deutlich reduziert werden.

Hierbei ist es insbesondere vorteilhaft, wenn die Grenzfläche einen Abstand zur reellen Zwischenbildebene aufweist, der wenigstens die Hälfte einer maximalen Lichtblattdicke des Beleuchtungslichts in Richtung der optischen Achse der Aufrichteeinheit beträgt. Betrachtet wird hierbei insbesondere der Bereich des auf der Probenseite der Beleuchtungs- und Detektionsanordnung bereitgestellten Lichtblattes, welcher sich bezüglich der optischen Achse der Aufrichteeinheit vor bzw. hinter der Grenzfläche befindet. Ein dermaßen gewählter Abstand hat den Vorteil, dass der Strahlengang des Beleuchtungslichts die Grenzfläche des Vorsatzelementes nicht schneidet und somit ungehindert zur Beleuchtungs- und Detektionsanordnung gelangen kann, um nach Abbildung durch diese das Lichtblatt im Probenvolumen auszubilden.

Als Strahlengang sowohl für das Beleuchtungslicht als auch für das Streu- und/oder Fluoreszenzlicht ist insbesondere jener Bereich des Lichtstrahls zu verstehen, innerhalb welchem ein vorab festgelegter Anteil einer Strahlengröße des betrachteten Lichts des Lichtstrahls gemessen wird. Hier kann, beispielsweise bei einer Gaußverteilung eines Lichtparameters über den Strahlquerschnitt, der Abfall der elektrischen Feldstärke auf 1/e bzw. der Intensität auf 1/e² betrachtet werden. Bei einer solchen Betrachtung werden die Schranken eines Lichtstrahls als der Bereich angesehen, in welchem die Intensität des Lichtstrahls auf 1,8 % der maximalen Intensität abgefallen ist. Bevorzugt kann der Durchmesser eines Strahlenganges beim doppelten bis dreifachen des (1/e²)-Wertes der Intensität definiert werden. Hierbei kann der doppelte (1/e²)-Wert der Intensität als Untergrenze zur Definition des Durchmessers des Strahlenganges dienen. Bevorzugt kann der Abstand zur Definition des Strahldurchmessers größer gewählt werden, zum Beispiel dem Fünffachen des (1/e²)-Wertes. Der (1/e²)-Abfall der Intensität entspricht von der Dimension einer Länge und kennzeichnet die Distanz zwischen dem Punkt der maximalen Intensität des Strahles bis zu einem Punkt, an welchem die Intensität nur noch 1/e² dieser maximalen Intensität entspricht, bei einem gaußförmigen Strahlprofil entspricht diese Länge einem Radius). Für nicht gaußförmige Strahlprofile können ähnliche Definitionen für den Strahldurchmesser festgelegt werden.

Die optische Anordnung kann weiter dadurch verbessert werden, dass das Vorsatzelement zylindersymmetrisch zur optischen Achse der Aufrichteeinheit ausgestaltet ist. Zylinderförmige optische Materialien haben den Vorteil, dass diese leicht herstellbar sind. Wird ein solches zylindersymmetrisch ausgestaltetes Vorsatzelement verwendet, kann die Grenzfläche des Vorsatzelementes in Richtung der optischen Achse der Aufrichteeinheit von der reellen Zwischenbildebene weg zur Aufrichteeinheit hin beabstandet angeordnet sein. Somit verläuft, aus Richtung der Aufrichteeinheit gesehen, der Strahlengang des Beleuchtungslichts vor dem Vorsatzelement, wobei der Strahlengang des Beleuchtungslichts die Grenzfläche nicht schneidet.

Alternativ kann das Vorsatzelement wenigstens teilweise im Strahlengang des Beleuchtungslichts angeordnet sein. Bei einer solchen Anordnung ist die Verwendung eines zylindersymmetrisch ausgestalteten Vorsatzelementes jedoch nicht möglich. Die Grenzfläche kann in einer solchen Ausgestaltung somit von der optischen Aufrichteeinheit weg und im Wesentlichen hin zur optischen Beleuchtungs- und Detektionsanordnung versetzt angeordnet sein. In dieser Ausgestaltung verläuft die optische Achse einer das Beleuchtungslicht bereitstellenden, d.h. transmittierenden Beleuchtungsoptik (und somit auch der Strahlengang des Beleuchtungslichtes) durch das Vorsatzelement hindurch.

Diese optische Achse kann bevorzugt senkrecht zur Achse der Aufrichteeinheit orientiert sein. Insbesondere kann die optische Achse des Beleuchtungslichts um einen Abstand von der Grenzfläche beabstandet sein, der wenigstens der Hälfte der Lichtblattdicke des nunmehr im Vorsatzelement ausgebildeten Lichtblattes beträgt. Dies stellt sicher, dass das Lichtblatt zwar im Vorsatzelement ausgebildet ist, jedoch die Grenzfläche nicht schneidet.

Das Vorsatzelement kann in dieser Ausgestaltung eine Einkoppelfacette und eine Auskoppelfacette aufweisen, welche dazu ausgestaltet sind, das Beleuchtungslicht in das Vorsatzelement einzukoppeln bzw. aus diesen auszukoppeln. Sowohl die Einkoppelfacette als auch die Auskoppelfacette sind bevorzugt zueinander parallel orientiert und können weiter bevorzugt senkrecht zur optischen Achse der Beleuchtungsoptik als auch zu einer Einkoppelrichtung des Beleuchtungslichts orientiert sein. Die Verwendung einer unter Brewster-Winkel angeordneten Einkoppel- und/oder Auskoppelfacette ist denkbar, stellt jedoch eine sehr spezielle Ausgestaltung der erfindungsgemäßen optischen Anordnung dar.

Sofern die Grenzfläche von der Zwischenbildebene beabstandet ist, können weitere Aberrationen der Aufrichteeinheit auftreten. Diesen kann durch geeignete Gegenmaßnahmen, wie zum Beispiel die Verwendung von Corr-Ringen, entgegengewirkt werden.

Alternativ oder zusätzlich kann die erfindungsgemäße optische Anordnung in einer weiteren Ausgestaltung ferner ein auf der Bildseite der optischen Beleuchtungs- und Detektionsanordnung angeordnetes reflektives Element zum Umlenken des Beleuchtungslichts in die optische Beleuchtungs- und Detektionsanordnung umfassen. Das reflektive Element kann ein metallischer oder dielektrischer Spiegel sein, der auch elektrisch steuerbar oder elektrisch deformierbar sein kann.

Das reflektive Element kann in einem Bereich angeordnet sein, der zwischen der Beleuchtungs- und Detektionsanordnung und der Aufrichteeinheit liegt. Bevorzugt kann das reflektive Element am Vorsatzelement angebracht oder in diesem integriert sein.

Die Verwendung eines reflektiven Elements zum Umlenken des Beleuchtungslichts in die Beleuchtungs- und Detektionsanordnung erlaubt es, dass sich das Vorsatzelement mit seiner Grenzfläche bis zur reellen Zwischenbildebene erstreckt, und dass eine Einkopplung des Beleuchtungslichts auf der Bildseite der Beleuchtungs- und Detektionsanordnung ermöglicht ist. Dies wiederum erlaubt ein einfaches Scannen des Lichtblatts im Probenvolumen mittels Bewegung wenigstens eines Elementes der Beleuchtungs- und Detektionsanordnung entlang deren optischer Achse.

Die Verwendung eines reflektiven Elements ist unabhängig von der Lage der Grenzfläche bezüglich der Zwischenbildebene.

Das reflektive Element kann fest oder wiederholt lösbar am Vorsatzelement angebracht sein. Das reflektive Element ist entweder am Vorsatzelement justierbar oder wird vor Anbringung am Vorsatzelement justiert.

In einer weiteren vorteilhaften Ausgestaltung der erfindungsgemäßen optischen Anordnung umfasst diese ferner eine das Beleuchtungslicht bereitstellende Beleuchtungsoptik mit einer optischen Achse, die schräg zur Grenzfläche orientiert ist. Der Strahlengang des Beleuchtungslichtes ist somit schräg zur Grenzfläche des Vorsatzelementes orientiert. In anderen Ausgestaltungen kann die optische Achse der Beleuchtungsoptik und das reflektive Element zur Einkopplung des Beleuchtungslichtes in die Beleuchtungs- und Detektionsanordnung derart orientiert sein, dass das reflektive Element parallel zur Grenzfläche orientiert ist. Ferner ist es denkbar, dass ein an die Grenzfläche angrenzender Bereich des Vorsatzelementes für das Beleuchtungslicht verspiegelt ist, d.h. dieses reflektiert, so dass das reflektive Element monolithisch mit dem Vorsatzelement ausgebildet ist. Vorzugsweise ist das reflektive Element jedoch ein separates optisches Bauteil. In jedem Fall ist die optische Achse des Beleuchtungslichts von der Grenzfläche beabstandet und schneidet diese nicht. Im Falle der Ausgestaltung eines reflektiven Bereiches, der an die Grenzfläche anschließt, ist dieser reflektive Bereich nicht Teil der Grenzfläche des Vorsatzelementes.

Die Beleuchtungsoptik kann ferner so orientiert sein, dass deren optische Achse am Vorsatzelement vorbei gerichtet ist.

Somit sind zusammenfassend zwei Möglichkeiten gegeben, den Strahlengang des Beleuchtungslichts von der Grenzfläche des Vorsatzelementes zu beabstanden. Einerseits ist dies durch ein Versetzen der Grenzfläche in Richtung der optischen Achse der Aufrichteeinheit möglich. Dieses Versetzen kann dazu führen, dass der Strahlengang des Beleuchtungslichts am Vorsatzelement vorbei, d.h. ohne dieses abschnittsweise zu durchdringen, oder durch das Vorsatzelement hindurch verläuft.

Unabhängig von einem solchen Versatz der Grenzfläche des Vorsatzelementes bezüglich der reellen Zwischenbildebene bzw. vom Strahlengang des Beleuchtungslichts, welches per Definition in dieser reellen Zwischenbildebene als Lichtblatt ausgebildet wird, ist die Verwendung des reflektiven Elements zur Einkopplung des Beleuchtungslichts in die Beleuchtungs- und Detektionsanordnung möglich. Bei Verwendung des reflektiven Elements ist die Beabstandung zwischen dem Strahlengang des Beleuchtungslichtes und der Grenzfläche durch eine Verkippung beider zueinander und nicht durch einen parallelen Versatz realisiert. Diese beiden Möglichkeiten können auch miteinander kombiniert werden.

Der Begriff "und/oder" umfasst alle Kombinationen von einem oder mehreren der zugehörigen aufgeführten Elemente und kann mit "/" abgekürzt werden.

Obwohl einige Aspekte im Rahmen einer Vorrichtung beschrieben wurden, ist es klar, dass diese Aspekte auch eine Beschreibung des entsprechenden Verfahrens darstellen, wobei ein Block oder eine Vorrichtung einem Verfahrensschritt oder einer Funktion eines Verfahrensschritts entspricht. Analog dazu stellen Aspekte, die im Rahmen eines Verfahrensschritts beschrieben werden, auch eine Beschreibung eines entsprechenden Blocks oder Elements oder einer Eigenschaft einer entsprechenden Vorrichtung dar.

Im Folgenden soll die erfindungsgemäße optische Anordnung unter Bezugnahme auf die beigefügten Zeichnungen im Detail näher beschrieben werden. Hierbei zeigen die Zeichnungen rein beispielhafte Ausgestaltungen der erfindungsgemäßen optischen Anordnung für ein Schiefeebenenmikroskop bzw. spezifische beispielhafte Ausgestaltungen von Schiefeebenenmikroskopen. Diese Ausgestaltungen schränken den Gegenstand, für den Schutz begehrt wird, nicht ein. Dieser wird durch die Ansprüche definiert.

Die Figuren zeigen:
- Fig. 1: eine erste Ausgestaltung der erfindungsgemäßen optischen Anordnung;
- Fig. 2: eine detaillierte Darstellung der optischen Anordnung der Fig. 1;
- Fig. 3: eine detaillierte Darstellung einer weiteren Ausgestaltung der erfindungsgemäßen optischen Anordnung; und
- Fig. 4: eine detaillierte Darstellung einer weiteren Ausgestaltung der erfindungsgemäßen optischen Anordnung.

In den folgenden Erläuterungen werden gleiche technische Merkmale und Merkmale gleicher technischer Funktion mit demselben Bezugszeichen versehen. Die hiernach beschriebenen technischen Merkmale sind beliebig miteinander kombinierbar.

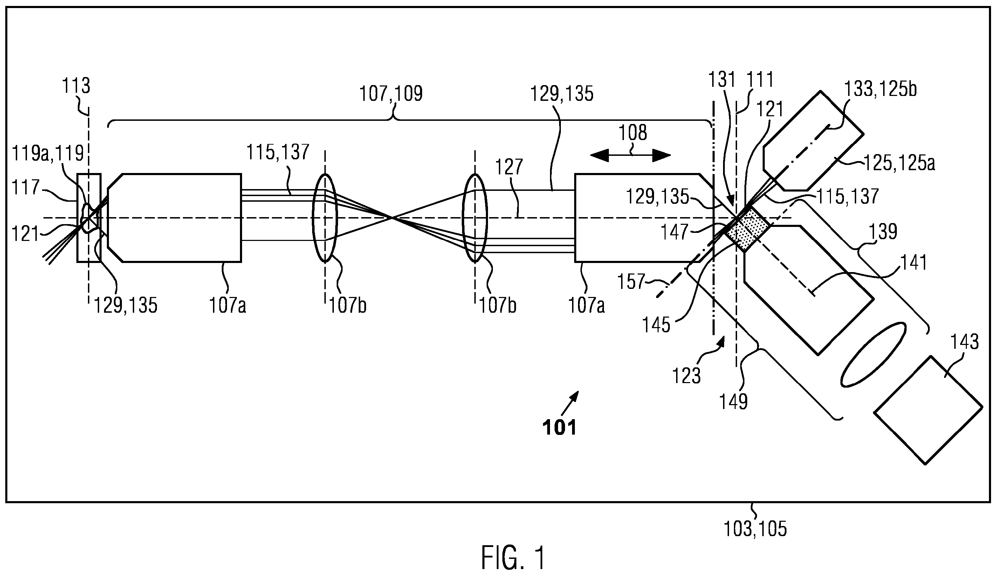

Die Fig. 1 zeigt eine optische Anordnung 101 gemäß der vorliegenden Erfindung. Diese kann Teil eines Schiefeebenenmikroskops 103, wie eines OPM Mikroskops 105 sein. Das Schiefeebenenmikroskop 103 ist lediglich schematisch durch eine Umrandung in der Fig. 1 angedeutet.

Die optische Anordnung 101 umfasst eine optische Beleuchtungs- und Detektionsanordnung 107, welche symmetrisch ausgestaltet ist. Diese umfasst zwei Objektive 107a und zwei Tubuslinsen 107b. Durch den symmetrischen Aufbau der optischen Beleuchtungs- und Detektionsanordnung 107 stellt diese ein sogenanntes 4f-Teleskop 109 dar.

Dieses hat die Eigenschaft, eine Lichtverteilung, beispielsweise von beleuchteten Bereichen einer Probe von einer ersten Fokusebene 111 zu einer zweiten Fokusebene 113 in einer 1:1 Abbildung abzubilden. Da optische Wege umkehrbar sind, ist ebenso die Abbildung einer Lichtverteilung von der zweiten Fokusebene 113 in die erste Fokusebene 111 möglich. Dies wird zur Beleuchtung genutzt.

Die Beleuchtungs- und Detektionsanordnung 107 ist dazu ausgestaltet, Beleuchtungslicht 115 in Richtung eines Probenvolumens 117 zu transmittieren und im Probenvolumen 117, in welchem sich eine Probe 119 befinden kann, ein Lichtblatt 121 auszubilden.

Ein Lichtblatt 121 ist als ein im Wesentlichen 2-dimensional beleuchteter Bereich zu verstehen. Dieser kann entweder statisch, beispielsweise durch Nutzung von Zylinderlinsen, oder dynamisch unter Nutzung gepulster Beleuchtung bereitgestellt werden.

Das im Probenvolumen 117 gezeigte Lichtblatt 121 ist bereits auf einer Bildseite 123 der optischen Beleuchtungs- und Detektionsanordnung 107 ausgebildet und wird durch die Beleuchtungs- und Detektionsanordnung 107 in das Probenvolumen 117 abgebildet.

In der gezeigten Ausgestaltung wird das Beleuchtungslicht 115 von einer Beleuchtungsoptik 125 von der Bildseite 123 in die Beleuchtungs- und Detektionsanordnung 107 entlang eines Strahlenganges 135 des Streu-und/oder Fluoreszenzlichtes 129 eingekoppelt. Die Bildseite 123 liegt auf einer, dem Probenvolumen 117 abgewandten Seite der Beleuchtungs- und Detektionsanordnung 107.

Die Einkopplung erfolgt bevorzugt auf der Bildseite 123, da es eine solche Einkopplung erlaubt mittels einer Bewegung 108 eines Objektivs 107a das Lichtblatt 121 im Probenvolumen 117 zu bewegen, und so z.B. die Probe 119 zu scannen bzw. zu rastern.

Das Lichtblatt 121 ist sowohl auf der Probenseite 123, als auch im Probenvolumen 117 schräg zu einer optischen Achse 127 der optischen Beleuchtungs- und Detektionsanordnung 107 orientiert.

Die vom Lichtblatt 121 im Probenvolumen 117 beleuchteten Bereiche 119a der Probe 119 emittieren Streu-und/oder Fluoreszenzlicht 129, welches lediglich durch einen einzigen symbolischen Strahl schematisch dargestellt ist.

Die optische Beleuchtungs- und Detektionsanordnung 107 sammelt das Streu- und/oder Fluoreszenzlicht 129 und transmittierten dieses. Somit bildet sie den vom Lichtblatt 121 beleuchteten Bereich 119a der Probe 119 gemäß dem gezeigten schematischen Strahlengang auf der Probenseite 123 als reelles Zwischenbild 131 in einer reellen Zwischenbildebene 133 ab. Auch das auf der Probenseite 123 ausgebildete Lichtblatt 121 liegt in dieser Zwischenbildebene, sodass sich der Strahlengang 135 des Streu-und/oder Fluoreszenzlichtes 129 und der Strahlengang 137 des Beleuchtungslichtes 115 auf der Probenseite 123 schneiden.

Auch das reelle Zwischenbild 131 und die reellen Zwischenbildebene 133 sind schräg zur optischen Achse 127 der Beleuchtungs- und Detektionsanordnung 107 orientiert.

Ferner umfasst die optische Anordnung 101 eine optische Aufrichteeinheit 139 die eine optische Achse 141 aufweist, welche im Wesentlichen senkrecht zur reellen Zwischenbildebene 133 und schräg zur optischen Achse 127 der Beleuchtungs- und Detektionsanordnung 107 orientiert ist. Die optische Aufrichteeinheit 139 ermöglicht aufgrund seiner Verkippung eine unverzerrte Abbildung des reellen Zwischenbildes 131 auf einem Detektor 143.

An der optischen Aufrichteeinheit 139 ist ein Vorsatzelement 145 angeordnet, welches sich von der Aufrichteeinheit 139 in Richtung des reellen Zwischenbildes 131 erstreckt.

Das Vorsatzelement 145 bildet eine im Wesentlichen parallel zur reellen Zwischenbildebene 133 orientierte Grenzfläche 147 aus. Diese Grenzfläche 147 ist eben und nicht gekrümmt. Eine detailliertere Darstellung der Grenzfläche 147 zeigen die nachfolgenden Figuren.

In Fig. 1 ist ferner erkennbar, dass der Strahlengang 137 des Beleuchtungslichts 115 von der Grenzfläche 147 des Vorsatzelementes 145 beabstandet ist.

Das Vorsatzelement 145 kann in die optische Aufrichteeinheit 139 integriert sein und ein gemeinsames Bauteil 149 ausbilden.

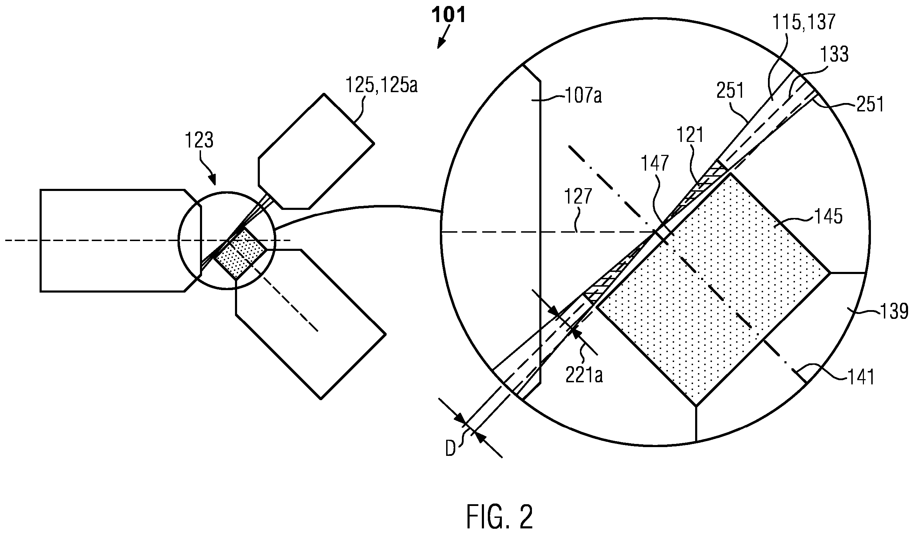

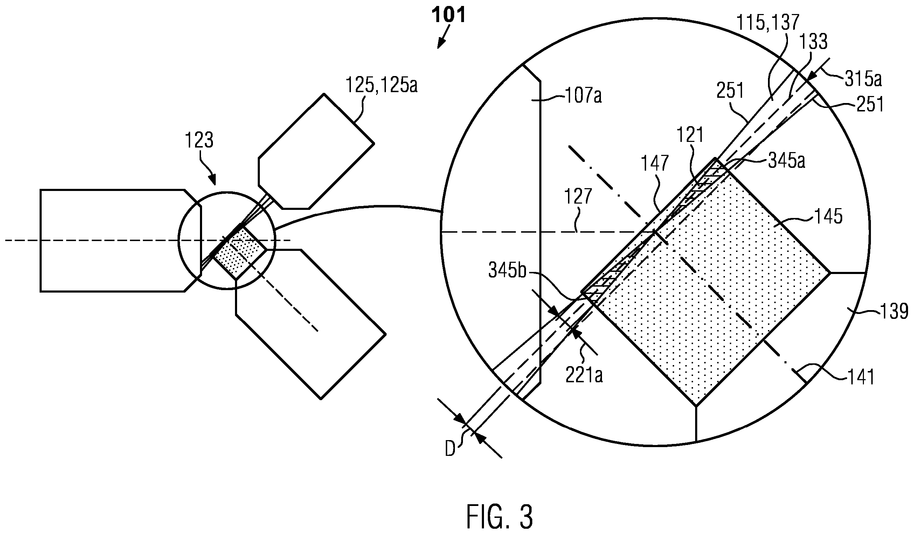

In Fig. 2 und Fig. 3 ist ein Bereich der Bildseite 123 der optischen Beleuchtungs- und Detektionsanordnung 107 vergrößert dargestellt. Fig. 2 zeigt die in Fig. 1 skizzierte Ausgestaltung der optischen Anordnung 101, wohingegen Fig. 3 eine weitere Ausgestaltung der erfindungsgemäßen optischen Anordnung 101 im Detail zeigt. Andere Merkmale der optischen Anordnungen 101, die nicht in den Detaildarstellungen gezeigt sind, bleiben unverändert.

Die Figuren zeigen jeweils das mit einer Schraffur angedeutete Lichtblatt 121, welches senkrecht zur optischen Achse 141 der Aufrichteeinheit 139 orientiert ist.

In den Figuren sind jeweils Einhüllende 251 des Strahlenganges 137 des Beleuchtungslichtes 115 gezeigt. Diese können beispielsweise einen Bereich des Strahls des Beleuchtungslichts 115 kennzeichnen, in welchem die Intensität des Beleuchtungslichts 115 auf das (1/e²)-fache des Maximalwertes der Intensität abgefallen ist (e ist die Eulersche Zahl; andere Definition eines Strahlquerschnittes sind möglich).

In beiden Figuren weist die Grenzfläche 147 des entsprechenden Vorsatzelementes 145 einen Abstand D zur reellen Zwischenbildebene 133 auf. Der Abstand D ist für die gezeigten Ausgestaltungen der Fig. 2 und der Fig. 3 identisch und beträgt in den gezeigten Fällen die Hälfte einer Lichtblattdicke 221a, d.h. im konkret gezeigten spezifischen Fall den Abstand zwischen Maximum und 1/e²-Abfall der Intensität.

Die in der Fig. 2 und Fig. 3 gezeigten Ausgestaltungen der erfindungsgemäßen optischen Anordnung 101 unterscheiden sich durch die Richtung entlang der jeweiligen optischen Achse 141 der entsprechenden Aufrichteeinheit 139, in welche die Grenzfläche 147 von der reellen Zwischenbildebene 133 beabstandet angeordnet ist.

In Fig. 2 ist die Grenzfläche 147 bezüglich der Zwischenbildebene 133 zurückversetzt (zur Aufrichteeinheit 139 hin), wohingegen in Fig. 3 die Grenzfläche 147 bezüglich der Zwischenbildebene 133 nach vorne versetzt (von der Aufrichteeinheit 139 weg) ist.

In der in Fig. 2 gezeigten Ausgestaltung propagiert das Beleuchtungslicht 115 nicht durch das Vorsatzelement 145.

In der in Fig. 3 gezeigten Ausgestaltung dagegen liegt der optische Strahlengang 137 des Beleuchtungslichtes 115 abschnittsweise im Vorsatzelement 145. Hierzu weist diese eine Einkoppelfacette 345a und eine Auskoppelfacette 345b auf, die beide senkrecht zur reellen Zwischenbildebene 133 (und somit auch zur Ausbreitungsrichtung 315a des Beleuchtungslichtes 115) und senkrecht zur optischen Achse 141 der Aufrichteeinheit 139 orientiert sind.

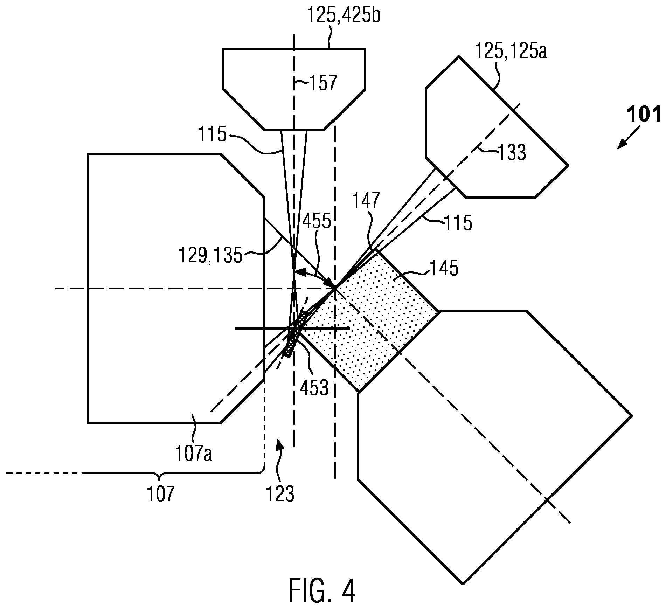

Die Fig. 4 zeigt eine weitere Ausgestaltung der erfindungsgemäßen optischen Anordnung 101. In dieser ist die Grenzfläche 147 des Vorsatzelementes 145 in der reellen Zwischenbildebene 133 angeordnet. Eine solche Anordnung führt dazu, dass die in den zuvor gezeigten Figuren dargestellte Position der Beleuchtungsoptik 125 nicht mehr verwendet werden kann, da hierbei eine Abschattung des Beleuchtungslichts 115 am Vorsatzelement 145 auftreten würde. Eine solche erste Beleuchtungsposition 125a wie in den Fig. 1-3 gezeigt, ist somit hier nicht mehr möglich.

Für die in Fig. 4 dargestellte Ausgestaltung der optischen Anordnung 101 ist es notwendig, die Beleuchtungsoptik 125 in einer zweiten Beleuchtungsposition 425b anzuordnen. Das von der Beleuchtungsoptik 125 ausgestrahlte Beleuchtungslicht 115 wird in der gezeigten Ausgestaltung in Richtung eines reflektiven Elements 453 in die optische Beleuchtungs- und Detektionsanordnung 107 (gezeigt ist lediglich ein Objektiv 107a derselben) eingekoppelt. Hierbei ist eine optische Achse 457 des Beleuchtungslichts 115 schräg zur Grenzfläche 147, d.h. auch unter dem Winkel 455 orientiert bzw. angeordnet.

Wie in Fig. 4 zu erkennen, ist in der gezeigten, rein beispielhaften Ausgestaltung der Fig. 4 (anders als in der Ausgestaltung der Fig. 3) die optische Achse 157 der Beleuchtungsoptik 125 am Vorsatzelement 145 vorbei gerichtet.

Das reflektive Element 453 ist bezüglich der Grenzfläche 147 schräg, das heißt unter einem Winkel 455 angeordnet, und befindet sich auf der Bildseite 123 der optischen Beleuchtungs- und Detektionsanordnung 107.

Das reflektive Element 453 kann am Vorsatzelement 145 fest oder wiederholt lösbar angebracht sein.

Die in Fig. 4 gezeigte Verwendung des reflektiven Elementes 453 kann unabhängig von einem Versatz der Grenzfläche bezüglich der reellen Zwischenbildebene erfolgen. Eine Kombination beider Ansätze ist möglich.

### Bezugszeichen

- 101: optische Anordnung
- 103: Schiefeebenenmikroskop
- 105: OPM Mikroskop
- 107: optische Beleuchtungs- und Detektionsanordnung
- 107a: Objektiv
- 107b: Tubuslinse
- 108: Bewegung
- 109: 4f-Teleskop
- 111: erste Fokusebene
- 113: zweite Fokusebene
- 115: Beleuchtungslicht
- 117: Probenvolumen
- 119: Probe
- 119a: Bereich der Probe
- 121: Lichtblatt
- 123: Bildseite
- 125: Beleuchtungsoptik
- 125a: erste Beleuchtungsposition
- 127: optische Achse der optischen Beleuchtungs- und Detektionsanordnung
- 129: Streu-und/oder Fluoreszenzlicht
- 131: reelles Zwischenbild
- 133: reelle Zwischenbildebene
- 135: Strahlengang des Streu-und/oder Fluoreszenzlichtes
- 137: Strahlengang des Beleuchtungslichtes
- 139: optische Aufrichteeinheit
- 141: optische Achse der Aufrichteeinheit
- 143: Detektor
- 145: Vorsatzelement
- 147: Grenzfläche
- 149: gemeinsames Bauteil
- 251: Einhüllende
- 315a: Ausbreitungsrichtung des Beleuchtungslichts
- 345a: Einkoppelfacette
- 345b: Auskoppelfacette
- 425b: zweite Beleuchtungsposition
- 453: reflektives Element
- 455: Winkel
- 457: optische Achse des Beleuchtungslichts

- D: Abstand

## Patentansprüche

1. Optische Anordnung (101) für ein Schiefeebenenmikroskop (103), beispielsweise ein OPM- (105) oder SCAPE-Mikroskop, wobei die Optische Anordnung (101) umfasst:
- eine optische Beleuchtungs- und Detektionsanordnung (107), die ausgestaltet ist, (a) Beleuchtungslicht (115) in Richtung eines Probenvolumens (117) zu transmittieren und im Probenvolumen (117) mit dem Beleuchtungslicht (115) ein schräg zu einer optischen Achse (127) der Beleuchtungs- und Detektionsanordnung (107) orientiertes Lichtblatt (121) auszubilden, und (b) Streu- und/oder Fluoreszenzlicht (129) aus einem mit dem Lichtblatt (121) beleuchtetem Bereich des Probenvolumens (117) aufzufangen und zu transmittieren, wobei die optische Beleuchtungs- und Detektionsanordnung (107) ausgestaltet ist, den beleuchteten Bereich (119a) der Probe als reelles Zwischenbild (131) in einer reellen Zwischenbildebene (133) abzubilden, welche schräg bezüglich der optischen Achse (127) der optischen Beleuchtungs- und Detektionsanordnung (107) orientiert und auf einer, dem Probenvolumen (117) abgewandten Bildseite (123) der Beleuchtungs- und Detektionsanordnung (107) ausgebildet ist;
- eine optische Aufrichteeinheit (139) zum Abbilden des reellen Zwischenbildes (131) auf einem Detektor (143), wobei eine optische Achse (141) der Aufrichteeinheit (139) geneigt zur optischen Achse (127) der optischen Beleuchtungs- und Detektionsanordnung (107) und im Wesentlichen senkrecht zur reellen Zwischenbildebene (133) orientiert ist; und
- ein an der Aufrichteeinheit (139) angeordnetes, sich in Richtung des reellen Zwischenbildes (131) erstreckendes Vorsatzelement (145), welches eine im Wesentlichen parallel zur reellen Zwischenbildebene (133) orientierte Grenzfläche (147) ausbildet.

2. Optische Anordnung (101) nach Anspruch 1, wobei sich Strahlengänge (125b, 135) des eingekoppelten Beleuchtungslichts (115) und des von der Beleuchtungs- und Detektionsanordnung (107) transmittierten Streu- und/oder Fluoreszenzlichts (129) auf der Bildseite (123) der Beleuchtungs- und Detektionsanordnung (107) schneiden.

3. Optische Anordnung (101) nach Anspruch 1 oder 2, wobei der Strahlengang (125b) des Beleuchtungslichts (115) von der Grenzfläche (147) des Vorsatzelementes (145) beabstandet ist

4. Optische Anordnung (101) nach einem der Ansprüche 1 bis 3, wobei der Strahlengang (125b) des Beleuchtungslichts (115) von der Grenzfläche (147) des Vorsatzelementes (145) durch einen parallelen Versatz, oder durch eine Verkippung zwischen dem Strahlengang (125b) des Beleuchtungslichts (115) und der Grenzfläche (147) des Vorsatzelementes (145) beabstandet ist.

5. Optische Anordnung (101) nach einem der Ansprüche 1 bis 4, wobei die Grenzfläche 147 bezüglich der Zwischenbildebene 133 zur Aufrichteeinheit 139 hin oder bezüglich der Zwischenbildebene 133 von der Aufrichteeinheit 139 weg versetzt ist.

6. Optische Anordnung (101) nach einem der Ansprüche 1 bis 5, wobei das Vorsatzelement (145) in die optische Aufrichteeinheit (139) unter Bildung eines gemeinsamen Bauteils (149) integriert ist.

7. Optische Anordnung (101) nach einem der Ansprüche 1 bis 6, wobei die Aufrichteeinheit (139) ein Immersionsobjektiv ist.

8. Optische Anordnung (101) nach einem der Ansprüche 1 bis 7, wobei die Grenzfläche (147) des Vorsatzelementes (145) entlang der optischen Achse (141) der Aufrichteeinheit (139) beabstandet von der reellen Zwischenbildebene (133) angeordnet ist.

9. Optische Anordnung (101) nach Anspruch 8, wobei die Grenzfläche (147) einen Abstand (D) zur reellen Zwischenbildebene (133) aufweist, der wenigstens die Hälfte einer maximale Lichtblattdicke (221a) des Beleuchtungslichts (115) in Richtung der optischen Achse der Aufrichteeinheit (139) beträgt.

10. Optische Anordnung (101) nach einem der Ansprüche 1 bis 9, wobei das Vorsatzelement (145) zylindersymmetrisch zur optischen Achse (141) der Aufrichteeinheit (139) ausgestaltet ist oder wobei das Vorsatzelement (145) wenigstens teilweise im Strahlengang (137) des Beleuchtungslichts (115) angeordnet ist.

11. Optische Anordnung (101) nach einem der Ansprüche 1 bis 10, ferner umfassend ein auf der Bildseite (123) der optischen Beleuchtungs- und Detektionsanordnung (107) angeordnetes reflektives Element (453) zum Umlenken des Beleuchtungslichts (115) in die optische Beleuchtungs- und Detektionsanordnung (107), wobei das reflektive Element (453) insbesondere am Vorsatzelement (145) angebracht oder in diesem integriert ist und

12. Optische Anordnung (101) nach Anspruch 11, ferner umfassend eine das Beleuchtungslicht (115) bereitstellende Beleuchtungsoptik (125) mit einer optischen Achse (125a), die schräg zur Grenzfläche (147) orientiert ist, wobei die optische Achse (125a) der Beleuchtungsoptik (125) insbesondere am Vorsatzelement (145) vorbei gerichtet ist.

13. Optische Anordnung (101) nach einem der Ansprüche 1 bis 12, wobei das Vorsatzelement (145) ein optisches Material mit einer Brechzahl größer als Luft umfasst und/oder wobei das Vorsatzelement (145) aus einem zumindest für die Wellenlängen des Streu-und/oder Fluoreszenzlichtes transparenten Material besteht.

14. Optische Anordnung (101) nach einem der Ansprüche 1 bis 13, ferner umfassend Befestigungsstrukturen zur Befestigung des Vorsatzelementes (145), wobei die Befestigungsstrukturen in Randbereichen des Vorsatzelementes (145) vorgesehen sind.

15. Optische Anordnung (101) nach einem der Ansprüche 1 bis 14, wobei das Vorsatzelement (145) quaderförmig oder würfelförmig oder kegelstumpfförmig ausgestaltet ist, insbesondere mit kegelstumpfförmigen Vorsatzelement (145), und wobei sich eine Grundfläche des Vorsatzelementes (145) insbesondere an der Aufrichteeinheit befindet und die Deckfläche die Grenzfläche umfasst.

16. Optische Anordnung (101) nach einem der Ansprüche 10 bis 15, wobei das Vorsatzelement (145) eine Einkoppelfacette und eine Auskoppelfacette aufweist, welche dazu ausgestaltet sind, das Beleuchtungslicht in das Vorsatzelement (145) einzukoppeln bzw. aus diesen auszukoppeln.

17. Optische Anordnung (101) nach einem der Ansprüche 11 bis 16, wobei das reflektive Element (453) am Vorsatzelement (145) fest oder wiederholt lösbar angebracht ist und/oder wobei das reflektive Element (453) monolithisch mit dem Vorsatzelement (145) ausgebildet ist.
